# EUROPÄISCHE PATENTSCHRIFT

(11) **EP 1 825 899 B1**
(45) Veröffentlichungstag und Bekanntmachung des Hinweises auf die Patenterteilung: **21.02.2018**
(21) Anmeldenummer: 07003548.0
(22) Anmeldetag: 21.02.2007
(51) Int. Cl.: B01D 39/16, B01D 39/20

(54) **Adsorptionsfiltermaterial mit integrierter Partikel- und/oder Aerosolfilterfunktion sowie seine Verwendung**
Adsorbent filter material with integrated particle and/or aerosol filter function and its application
Matériau de filtre d'absorption avec fonction de particule et/ou d'aérosol tout comme son utilisation

(30) Priorität: 27.02.2006 DE 102006009487; 11.05.2006 DE 102006021905
(43) Veröffentlichungstag der Anmeldung: 29.08.2007
(73) Patentinhaber: Blücher GmbH, 40699 Erkrath (DE)
(72) Erfinder: Von Blücher, Hasso, 40699 Erkrath (DE); Heinrich, Peter, Dr., 47447 Moers (DE); Kämper, Stefan, 40878 Ratingen (DE); Varga-Molnar, Anna, Dr., 41239 Mönchengladbach (DE)
(74) Vertreter: Von Rohr Patentanwälte Partnerschaft mbB

(56) Entgegenhaltungen:
- EP-A- 1 618 938
- DE-A1- 4 134 222
- DE-B3- 10 249 998
- FR-A1- 2 806 320

## Beschreibung

Die vorliegende Erfindung betrifft ein Adsorptionsfiltermaterial mit integriertem Partikel- und Aerosolschutz und mit Schutzfunktion gegenüber biologischen und/oder chemischen Schadstoffen, insbesondere biologischen und/oder chemischen Kampfstoffen, nach dem Oberbegriff von Anspruch 1 sowie dessen Verwendung, insbesondere zur Herstellung von Schutzmaterialien aller Art, insbesondere ABC-Schutzbekleidung, sowie von Filtern und Filtermaterialien aller Art. Des weiteren betrifft die vorliegende Erfindung die unter Verwendung des erfindungsgemäßen Adsorptionsfiltermaterials hergestellten Schutzmaterialien, insbesondere Schutzbekleidung (z. B. ABC-Schutzbekleidungsstücke), sowie Filter und Filtermaterialien selbst.

Es gibt eine Reihe von Stoffen, die von der Haut aufgenommen werden und zu schweren körperlichen Schäden führen. Als Beispiel seien das blasenziehende Lost (synonym als Gelbkreuz bzw. Senfgas bezeichnet) und das Nervengift Sarin erwähnt. Menschen, die mit solchen Giften in Kontakt kommen können, müssen einen geeigneten Schutzanzug tragen bzw. durch geeignete Schutzmaterialien gegen diese Gifte geschützt werden.

Grundsätzlich gibt es drei Typen von Schutzanzügen: Zum einen die luft- und wasserdampfundurchlässigen Schutzanzüge, die mit einer für biologische und chemische Gifte undurchlässigen Gummischicht ausgestattet sind und sehr schnell zu einem Hitzestau beim Träger führen, weiterhin Schutzanzüge, die mit einer Membran, welche zwar Wasserdampf, aber nicht biologische und chemische Gifte hindurchläßt, ausgestattet sind und schließlich die luft- und wasserdampfdurchlässigen Schutzanzüge, die den höchsten Tragekomfort bieten.

ABC-Schutzkleidung wird also traditionell entweder aus impermeablen Systemen (z. B. Anzügen aus Butylkautschuk oder Anzügen mit Membran) oder penneablen, luftdurchlässigen adsorptiven Filtersystemen insbesondere auf Basis von Aktivkohle (z. B. Pulverkohle, Aktivkohlefaserstoffe oder Kugelkohle etc.) hergestellt.

Während die luftundurchlässigen Membrananzüge zum einen zu einem relativ guten Schutz gegen chemische und biologische Gifte, wie Kampfstoffe oder dergleichen, führen und zum anderen infolge der Luftundurchlässigkeit bzw. Impermeabilität der Membran auch eine Schutzfunktion gegenüber Aerosolen und Schadstoffpartikeln besitzen, besitzen die permeablen, luftdurchlässigen, adsorptiv wirkenden Schutzanzüge zwar eine sehr gute Schutzwirkung in bezug auf chemische Gifte, welche aber oftmals nur unzureichend in bezug auf Aerosole und Schadstoffpartikel ist.

DE 102 49 998 B3 betrifft einen kombinierten Partikel- und Adsorptionsfilter mit einer Partikelfilterlage und mit zwei Adsorptionslagen, wobei die Partikelfilterlage zwischen den beiden Adsorptionslagen angeordnet und mit diesen verbunden ist. Jede Adsorptionslage weist an einer Trägerschicht eine Adsorptionsschicht auf. Die beiden Adsorptionslagen sind mit der Partikelfilterlage derart verbunden, dass die Adsorptionsschichten der Partikelfilterlage zugewandt und die Trägerschichten der beiden Adsorptionslagen von der Partikelfilterlage und voneinander abgewandt sind. Die Partikelfilterlage besteht aus einem elektrostatisch aufgeladenen Spinnvlies, das an seinen beiden voneinander abgewandten Hauptflächen mit elektrostatisch geladenen Mikro- und/oder Nanofasern entgegengesetzter elektrischer Polarität beschichtet ist. EP 1 618 938 A betrifft eine Filteranordnung umfassend wenigstens einen partikelfilternden Bereich und wenigstens einen chemischen Filterbereich, wobei der chemische Filterbereich einen Aktivkohlefilter umfasst. Der partikelfilternde Bereich und/oder der chemische Filterbereich sind als Vliesstofffilter ausgebildet, welcher Bereiche mit elektrostatischer Aufladung umfasst. Der Aktivkohlefilterbereich kann aus körniger Aktivkohle oder aus Flächengebilde aus Aktivkohlefasern auf einem Träger aus PP(Polypropylen) oder PES(Polyester) aufgebaut sein.

Zur Verbesserung der biologischen Schutzfunktion werden die permeablen, adsorptiven Filtersysteme, insbesondere auf Basis von Aktivkohle, oft mit einer katalytisch aktiven Komponente bzw. einem Katalysator ausgerüstet, indem die Aktivkohle mit einem biozid bzw. biostatisch wirkenden Katalysator, insbesondere auf Basis von Metallen oder Metallverbindungen, imprägniert wird. Jedoch kann hierdurch dem Problem der mangelnden Schutzfunktion gegenüber schädigenden Aerosolen (z. B. feinverteilt ausgebrachte chemische Schadstoffe, insbesondere Kampfstoffe) oder schädigenden Partikeln (z. B. schädigende Mikroorganismen oder an Trägerpartikeln fixierte Mikroorganismen, z. B. als biologische Kampfstoffe eingesetzte Viren oder Bakterien) nicht begegnet werden.

Es ist daher die Aufgabe der vorliegenden Erfindung, ein Adsorptionsfiltermaterial bzw. ein Schutzmaterial bereitzustellen, welches die zuvor geschilderten Nachteile des Standes des Technik zumindest weitgehend vermeidet oder aber wenigstens abschwächt. Insbesondere sollte sich ein solches Adsorptionsfilter- bzw. Schutzmaterial insbesondere für die Herstellung von ABC-Schutzmaterialien aller Art, wie z. B. ABC-Schutzbekleidung und dergleichen, sowie von Filter und Filtermaterialien eignen.

Eine weitere Aufgabe der vorliegenden Erfindung liegt darin, ein permeables, insbesondere gas- bzw. luftdurchlässiges Adsorptionsfilter- bzw. Schutzmaterial bereitzustellen, welches einerseits in bezug auf chemische und/oder biologische Gifte bzw. Schadstoffe, insbesondere chemische Kampfstoffe, eine wirksame Schutzfunktion entfaltet und andererseits auch einen Schutz gegenüber schädlichen Partikeln und/oder Aerosolen bereitstellt.

Das zuvor geschilderte Problem wird im Rahmen der vorliegenden Erfindung durch ein Adsorptionsfiltermaterial nach Anspruch 1 gelöst. Weitere, vorteilhafte Ausgestaltungen des erfindungsgemäßen Adsorptionsfiltermaterials sind Gegenstand der diesbezüglichen Unteransprüche.

Weiterer Gegenstand der vorliegenden Erfindung sind die Verwendung des erfindungsgemäßen Adsorptionsfiltermaterials zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise für den ABC-Einsatz, sowie die auf diese Weise hergestellten Schutzmaterialien der vorgenannten Art selbst.

Schließlich sind ein weiterer Gegenstand der vorliegenden Erfindung die Verwendung des erfindungsgemäßen Adsorptionsfiltermaterials zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich, sowie die auf diese Weise hergestellten Filter und Filtermaterialien der vorgenannten Art selbst.

Gegenstand der vorliegenden Erfindung - gemäß einem ersten Aspekt der vorliegenden Erfindung - ist somit ein Adsorptionsfiltermaterial nach Anspruch 1.

Eine grundlegende Idee der vorliegenden Erfindung besteht also darin, Adsorptionsfiltermaterialien mit mehrschichtigem Aufbau dadurch mit einer zusätzlichen, in das Adsorptionsfiltermaterial integrierten Partikel- und Aerosolschutzfunktion auszustatten, daß eine Partikel- und Aerosolfilterschicht, in das Adsorptionsfiltermaterial aufgenommen bzw. inkorporiert wird, welche selbst Bestandteil des Adsorptionsfiltermaterials als solchen ist.

Im allgemeinen ist die Partikel- und Aerosolfilterschicht zwischen der Adsorptionsschicht und der Abdeckschicht (d. h. der im Gebrauchszustand äußeren Schicht bzw. Außenschicht, z. B. ein Oberstoff) angeordnet, d. h. die Partikel- und Aerosolfilterschicht ist im allgemeinen auf der der Trägerschicht abgewandten Seite der Adsorptionsschicht angeordnet. Im Gebrauchszustand des erfindungsgemäßen Adsorptionsfiltermaterials ist die Abdeckschicht als Außenschicht (z. B. Oberstoff) der Schadstoffseite zugewandt, so daß der schadstoffhaltige, zu dekontaminierende Strom von beispielsweise biologischen und/oder chemischen Kampfstoffen zunächst durch die Abdeckschicht hindurchtritt, dann auf die Partikel- und Aerosolfilterschicht trifft, von der Partikel- und/oder Aerosole zurückgehalten werden, und dann die noch im Strom verbleibenden chemischen und/oder biologischen Schadstoffe, insbesondere Kampfstoffe, auf die nachfolgende Adsorptionsschicht treffen, von der sie dann adsorbiert und unschädlich gemacht werden.

Grrundsätzlich kann die zwischen der Adsorptionsschicht und der Abdeckschicht angeordnete Partikel- und Aerosolfiltezschicht, entweder auf der Innenseite der Abdeckschicht auf die Abdeckschicht auflaminiert sein oder aber lose bzw. unverbunden zwischen Abdeckschicht und Adsorptionsschicht angeordnet sein. Gemäß einer weiteren Alternative besteht die Möglichkeit, daß die Partikel- und Aerosolfiltershicht auf der Adsorptionsschicht fixiert ist (z. B. durch vorzugsweise diskontinuierliches Verkleben). Aufgrund des vorgenannten mehrschichtigen Aufbaus kombiniert das erfindungsgemäße Adsorptionsfiltermaterial in einem einzigen Material sowohl einen effizienten Partikel- und Aerosolschutz als auch einen effizienten Schutz gegenüber biologischen und/oder chemischen Schadstoffen, insbesondere biologischen und/oder chemischen Kampfstoffen.

Die Schutzfunktion des erfindungsgemäßen Adsorptionsfiltermaterials gegenüber Partikeln und Aerosolen ist vergleichbar mit herkömmlichen Membransystemen; jedoch ist aufgrund der Gasdurchlässigkeit, insbesondere Luftdurchlässigkeit, bzw. Permeabilität des erfindungsgemäßen Adsorptionsfiltermaterials der Tragekomfort bei der Verarbeitung zu ABC-Schutzanzügen im Vergleich zu Membrananzügen deutlich erhöht.

Was die Partikel- und Aerosolfilterschicht anbelangt, so ist diese im allgemeinen als ein textiles Flächengebilde, vorzugsweise ein luftdurchlässiges Textilmaterial, ausgebildet. Beispiele für als Partikel- und Aerosolfilterschicht geeignete textile Flächengebilde sind Gewebe, Gewirke, Gestricke, Gelege und Textilverbundstoffe, insbesondere Vliese. Besonders bevorzugt sind Vliese bzw. Vliesstoffe.

Der Begriff der Vliese bzw. Vliesstoffe wird im Rahmen der vorliegenden Erfindung insbesondere als Bezeichnung für zu den Textilverbundstoffen zählende, flexible, poröse Flächengebilde verwendet, die nicht durch die klassischen Methoden der Gewebebindung von Kette und Schuß oder durch Maschenbildung, sondern durch Verschlingung und/oder kohäsive und/oder adhäsive Verbindungen von Textilfasern hergestellt sind. Vliese sind im allgemeinen lockere Materialien aus Spinnfasern oder Filamenten, insbesondere aus synthetischen Fasern bzw. Chemiefasern (z. B. Polypropylen, Polyester, Viskose etc.) hergestellt, deren Zusammenhalt im allgemeinen durch die den Fasern eigene Haftung gegeben ist. Hierbei können die Einzelfasern eine Vorzugsrichtung aufweisen (sogenannte orientierte oder Kreuzlage-Vliese) oder aber auch ungerichtet sein (sogenannte Wirr-Vliese). Die Vliese können mechanisch verfestigt werden durch Vernadeln, Vermaschen oder durch Verwirbeln mittels scharfer Wasserstrahlen (sogenannte Spunlaced-Vliese), Erfindungsgemäß besonders geeignete Vliese können beispielsweise durch Spunbonding, Meltblow-Verfahren und bevorzugt durch Elektrospinning (vgl. z. B. US 6 641 773 B2) hergestellt werden. Adhäsiv verfestigte Vliese entstehen durch Verkleben der Fasern mit flüssigen Bindemitteln (z. B. Acrylatpolymere, SBR/NBA, Polyvinylester oder Polyurethandispersionen) oder durch Schmelzen bzw. Auflösen von sogenannten Bindefasern, die dem Vlies bei der Herstellung beigemischt werden. Bei der kohäsiven Verfestigung werden die Faseroberflächen durch geeignete Chemikalien angelöst und durch Druck verbunden oder bei erhöhter Temperatur verschweißt. Vliese aus sogenannten Spinnvliesen, d. h. durch Erspinnen und anschließendes Ablegen, Aufblasen oder Aufschwämmen auf ein Transportband hergestellte Flächengebilde, nennt man Spinnvliesstoffe (Englisch: Spunbondeds). Zusätzliche Fäden, Gewebe oder Gewirke enthaltende Vliese gelten als verstärkte Vliesstoffe. Aufgrund der Vielzahl zur Verfügung stehender Rohstoffe, Kombinationsmöglichkeiten und Verbesserungstechniken lassen sich Vliese bzw. Vliesstoffe mit beliebigen, zweckspezifischen Eigenschaften gezielt herstellen. Wie alle Textilien lassen sich auch Vliesstoffe bzw. Vliese den Prozessen der Textilveredlung unterziehen. Für weitergehende Einzelheiten zum Begriff der Vliese und der Vliesstoffe kann beispielsweise verwiesen werden auf Römpp Chemielexikon, 10. Auflage, Georg Thieme Verlag Stuttgart/New York, Band 6, 1999, Seiten 4889/4890, Stichwort: "Vliesstoffe", deren gesamter Offenbarungsgehalt, einschließlich der dort referierten Literaturstellen, hiermit durch Bezugnahme eingeschlossen ist.

Das Flächengewicht der erfmdungsgemäß eingesetzten Partikel- und Aerosolfilterschicht kann in weiten Bereichen variieren. Im allgemeinen liegt das Flächengewicht der erfindungsgemäß eingesetzten Partikel- und Aerosol-flterschicht im Bereich von 1 bis 100 g/m², insbesondere 5 bis 50 g/m². Insbesondere sollte die Partikel- und/oder Aerosolfilterschicht ein Flächengewicht von höchstens 100 g/m², insbesondere höchstens 50 g/m², aufweisen. Jedoch kann es anwendungsbezogen oder einzelfallbedingt vorteilhaft oder erforderlich sein, von den vorgenannten Werten abzuweichen, ohne daß der Rahmen der vorliegenden Erfindung verlassen wird.

Besonders gute Partikel- und Aerosolabscheideraten werden erreicht, wenn als Partikel- und Aerosolfilterschicht ein aus Textilfasern bestehendes textiles Flächengebilde, vorzugsweise Vlies, eingesetzt wird, dessen mittlerer Durchmesser der Textilfasern höchstens 50 µm, insbesondere höchstens 30 µm, vorzugsweise höchstens 20 µm, bevorzugt höchstens 10 µm, besonders bevorzugt höchstens 5 µm, ganz besonders bevorzugt höchstens 2 µm, beträgt. Im allgemeinen sollte der Durchmesser der Textilfasern, aus denen das die Partikel- und Aerosolfilterschicht bildende textile Flächengebilde besteht, im Bereich von 0,05 bis 50 µm, insbesondere 0,1 bis 50 µm, vorzugsweise 0,2 bis 30 µm, besonders bevorzugt 0,2 bis 20 µm, ganz besonders bevorzugt 0,5 bis 10 µm, liegen. Geeignete textile Flächengebilde, insbesondere Vliese, mit den vorgenannten Textilfaserdurchmessern lassen sich z. B. im Meltblow- oder bevorzugt im Elekttospinning-Verfahren herstellen. Insbesondere ist die Partikel- und/oder Aerosolfilterschicht als ein aus Textilfasern bestehendes textiles Flächengebilde mit durch die Textilfasern begrenzten Poren oder Maschen ausgebildet. Die einzelnen Textilfasern begrenzen also die Maschen (z. B. im Falle von Geweben) oder Poren (z. B. im Falle von Vliese). Dabei sollte das textile Flächengebilde eine mittlere Porengröße oder mittlere Maschenweite - je nach Art des Flächengebildes - von höchstens 200 µm, insbesondere höchstens 100 µm, vorzugsweise höchstens 75 µm, besonders bevorzugt höchstens 50 µm, ganz besonders bevorzugt höchstens 40 µm, aufweisen. Auf diese Weise wird eine besonders gute Abscheiderate in bezug auf unschädlich zu machende Partikel und/oder Aerosole erreicht.

Wie die Anmelderin überraschenderweise herausgefunden hat, hängt die Leistungsfähigkeit der Partikel- und Aerosolfilterschicht, die ein aus Textilfasern bestehendes textiles Flächengebilde der vorgenannten Art mit durch die Textilfasern begrenzten Poren oder Maschen ist, entscheidend auch vom Verhältnis der mittleren Porengröße oder Maschenweite zum mittleren Durchmesser der Textilfasern ab. Das Verhältnis bzw. der Quotient der mittleren Porengröße oder Maschenweite zum mittleren Durchmesser der Textilfasern liegt im Bereich von 25 bis 500, insbesondere 25 bis 350, besonders bevorzugt 25 bis 300, ganz besonders bevorzugt 25 bis 250. Insbesondere sollte das Verhältnis bzw. der Quotient der mittleren Porengröße oder Maschenweite zum mittleren Durchmesser der Textilfasern höchstens 2.000, insbesondere höchstens 500, vorzugsweise höchstens 350, besonders bevorzugt höchstens 300, ganz besonders bevorzugt höchstens 250, betragen. Jedoch sollte das Verhältnis bzw. der Quotient der mittleren Porengröße oder Maschenweite zum mittleren Durchmesser der Textilfasern mindestens 0,1, insbesondere mindestens 1, bevorzugt mindestens 5, besonders bevorzugt mindestens 10, ganz besonders bevorzugt mindestens 25, noch mehr bevorzugt mindestens 40, betragen. Auf diese Weise werden besonders effiziente Abscheideraten in bezug auf die unschädlich zu machenden Partikel und Aerosole erreicht.

Wie zuvor ausgeführt, ist die Partikel- und Aerosolfilterschicht ein aus Textilfasern bestehendes textiles Flächengebilde, vorzugsweise Vlies. Dabei können als Textilfasern natürliche und/oder synthetische Fasern, vorzugsweise synthetische Fasern (synonym auch als Chemiefasern bezeichnet), eingesetzt werden. Erfindungsgemäß geeignete Textilfasern, aus denen das die Partikel- und/oder Aezosolhlterschicht bildende textile Flächengebilde besteht, sind beispielsweise ausgewählt aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyvinylalkohol (PVAL); Polyurethanen; Polyvinylestern; (Meth-)Acrylaten; sowie deren Mischungen. Die vorgenannten Kurzzeichen für die Textilfasern entstammen der DIN 60001-4 (August 1991).

Für weitergehende Einzelheiten zu dem Begriff der Textilfasern - synonym auch als textile Faserstoffe bezeichnet - kann beispielsweise verwiesen werden auf Römpp Chemielexikon, a.a.O., Seiten 4477 bis 4479, Stichwort: "Textilfasern", deren gesamter Offenbarungsgehalt, einschließlich der dort referierten Literaturstellen, hiermit durch Bezugnahme eingeschlossen ist. Insbesondere wird im Rahmen der vorliegenden Erfindung der Begriff der Textilfasern als eine Sammelbezeichnung für sämtliche Fasern, die sich textil verarbeiten lassen, verstanden; gemeinsam ist den Textilfasern eine im Vergleich zu ihrem Querschnitt große Länge sowie ausreichende Festigkeit und Biegsamkeit, wobei sich die Textilfasern nach Herkunft oder stofflicher Beschaffenheit in verschiedene Gruppen einteilen lassen.

Um eine effiziente Abscheiderate in bezug auf die unschädlich zu machenden Partikel und Aerosole zu erreichen, weist die Partikel- und Aerosol-filterschicht einen mittleren Wirkungsgrad Eₘ nach DIN EN 779 (Juli 1993) von mindestens 70 %, besonders bevorzugt mindestens 90 %, ganz besonders bevorzugt mindestens 95 %, auf. Weiterhin weist die Partikel- und Aerosol-filterschicht zu diesem Zweck einen mittleren Abscheidegrad Am nach DIN EN 779 (Juli 1993) von mindestens 70 %, vorzugsweise mindestens 90 %, besonders bevorzugt mindestens 95 %, ganz besonders bevorzugt mindestens 99 %, auf. Die DIN EN 779 vom Juli 1993 betrifft die Anforderungen, Prüfung und Kennzeichnung von Partikel-Luftfiltern für allgemeine Raumlufttechnik. Nach dieser Vorschrift wird der mittlere Abscheidegrad Am durch eine gravimetrische Prüfmethode bestimmt, wobei eine mehrmalige Bestaubung des Prüflings mit einer bekannten Menge eines standardisierten künstlichen Prüfstaubes in strömender Luft bis zum maximalen Enddruckverlust von 250 Pa erfolgt, wobei jeweils der Abscheidegrad aus den Massenverhältnissen durch Wägen eines dem Prüfling nachgeschalteten Schwebstoffilters bestimmt wird, wobei der mittlere Abscheidegrad A_{m,} berechnet aus allen Einzelmessungen, gilt; für weitere diesbezügliche Einzelheiten kann auf die DIN EN 779 verwiesen werden. Der mittlere Wirkungsgrad Eₘ dagegen wird nach DIN 779 mittels einer Verfärbungsprüfmethode durch mehrfache Messung des Wirkungsgrades gegenüber natürlichem atmosphärischem Staub in der Luft gemessen, wobei der Prüfling nach einer ersten Messung im Neuzustand mit einer bekannten Menge von standardisierten künstlichem Prüfstaub nach DIN EN 779 beladen und danach die Bestimmung des Wirkungsgrads erneut vorgenommen wird, bis ein Enddruckverlust von 450 Pa erreicht ist, wobei die Messung des Wirkungsgrades auf dem Vergleich jener Prüfluftvolumina beruht, die vor und nach dem Prüfling durch je ein weißes Schwebstoffilterpapier gesaugt werden müssen, bis diese gleich verfärbt bzw. getrübt sind, wobei der mittlere Wirkungsgrad E_{m,} berechnet aus allen Einzelmessungen, gilt; für weitere diesbezügliche Einzelheiten kann auf DIN EN 779 verwiesen werden.

Zu Zwecken der Erzielung einer guten Partikel- und Aerosolabscheidung sollte zudem der integrale Anfangsdurchlaßgrad Dᵢ der Partikel- und Aerosolfilterschicht nach DIN EN 1822 (April 1989; DEHS-Aerosol (Diethylhexylsebacat), Most Penetrating Particle Size = MPPS 0,1 bis 0,3 µm) höchstens 50 %, insbesondere höchstens 40 %, vorzugsweise höchstens 30 %, besonders bevorzugt höchstens 20 %, ganz besonders bevorzugt höchstens 10 %, betragen. Die Prüfmethode gemäß DIN EN 1822 wird an unverschmutzten Prüflingen mit einem flüssigen Prüfaerosol (DEHS = Diethylhexylsebacat), basierend auf Meßwerten für jeweils einen dem Durchlaßgradmaximum entsprechenden Partikeldurchmesser (sogenannter MPPS, hier: 0,1 bis 0,3 µm), durchgerührt. In einem ersten Schritt der Untersuchung wird an flachen Mustern des Filtermedium jene Partikelgröße ermittelt, bei welcher das Durchlaßmaximum (MPPS) erreicht wird, wobei die nachfolgende Beurteilung und Klassierung der Filter nur noch für den MPPS erfolgt. In einem zweiten Schritt wird dann der über die Ausblasfläche ermittelte integrale Durchlaßgrad Dᵢ für den MPPS und der Druckverlust des Filters, beides beim Nennvolumenstrom, gemessen. Für weitergehende diesbezügliche Einzelheiten kann auf die DIN EN 1822 verwiesen werden.

Vorteilhafterweise ist die Partikel- und Aerosolfilterschicht derart ausgebildet, daß sie bei einer Anströmgeschwindigkeit von 0,1 m/s eine mittlere Abscheiderate gegenüber Partikeln und Aerosolen mit Durchmessern im Bereich von 0,1 bis 0,3 µm von mindestens 80 %, insbesondere mindestens 90 %, vorzugsweise mindestens 95 %, aufweist.

Weiterhin sollte die Partikel- und Aerosolfilterschicht bei einer Anströmgeschwindigkeit von 0,1 m/s eine mittlere Abscheiderate gegenüber Partikeln und Aerosolen mit Durchmessern ≥ 2 µm, insbesondere ≥ 1,5 µm, von mindestens 95 %, insbesondere mindestens 98 %, bevorzugt mindestens 99 %, aufweisen.

Die Dicke der Partikel- und Aerosolflterschicht sollte im Bereich von 0,001 bis 10 mm, insbesondere 0,1 bis 5 mm, vorzugsweise 0,01 bis 1 mm, liegen.

Gemäß einer besonderen Ausführungsform kann die Partikel- und Aerosolfilterschicht als ein sogenannter HEPA-Filter (High Efficiency Penetration oder Particulate Air) oder ULPA-Filter (Ultra Low Penetration oder Particulate Air) ausgebildet sein.

Um eine gute Gasdurchlässigkeit, insbesondere Luftdurchlässigkeit, des erfindungsgemäßen Adsorptionsfiltermaterials insgesamt und somit bei der Verarbeitung von ABC-Schutzanzügen einen hohen Tragekomfort zu gewährleisten, sollte die Partikel- und/oder Aerosolfilterschicht eine gute Gasdurchlässigkeit, insbesondere Luftdurchlässigkeit, aufweisen. Im allgemeinen sollte bei einem Strömungswiderstand von 127 Pa die Gasdurchlässigkeit, insbesondere Luftdurchlässigkeit, der Partikel- und Aerosolfilterschicht mindestens 10 l·m⁻²·s⁻¹, insbesondere mindestens 30 l·m⁻²·s⁻¹, vorzugsweise mindestens 50 l·m⁻²·s⁻¹, besonders bevorzugt mindestens 100 l·m⁻²·s⁻¹, ganz besonders bevorzugt mindestens 400 l·m·s⁻¹ oder mehr, betragen.

Was die erfindungsgemäß vorgesehene Adsorptionsschicht anbelangt, so kann diese grundsätzlich aus beliebigen, im Rahmen des erfindungsgemäßen Adsorptionsfiltermaterials geeigneten adsorptionsfähigen Materialien ausgebildet sein.

Gemäß einer erfindungsgemäß bevorzugten Ausführungsform ist die Adsorptionsschicht auf Basis von Aktivkohle ausgebildet, d. h. die adsorptionsfähige Schicht weist Aktivkohle auf oder besteht hieraus. Die Aktivkohle kann dabei in Form von Aktivkohleteilchen und/oder Aktivkohlefasern vorliegen.

Beispielsweise kann die Adsorptionsschicht diskrete Aktivkohleteilchen, vorzugsweise in Kornform ("Kornkohle") oder Kugelform ("Kugelkohle"), umfassen oder hieraus bestehen. Insbesondere beträgt in diesem Fall der mittlere Durchmesser der Aktivkohleteilchen < 1,0 mm, vorzugsweise < 0,8 mm, bevorzugt < 0,6 mm. Dabei beträgt der mittlere Durchmesser der Aktivkohleteilchen insbesondere mindestens 0,1 mm. Bei dieser Ausführungsform können die Aktivkohleteilchen in einer Menge (d. h. Beladungs- oder Auflagemenge) von 10 bis 500 g/m², insbesondere 25 bis 400 g/m², vorzugsweise 50 bis 300 g/m², bevorzugt 75 bis 250 g/m², besonders bevorzugt 80 bis 200 g/m², eingesetzt werden. Insbesondere werden solche Aktivkohleteilchen eingesetzt, die - bezogen auf ein einzelnes AktivkohleteiJchen, insbesondere Aktivkohlekörnchen bzw. -kügelchen - einen Berstendruck von 5 Newton, insbesondere mindestens 10 Newton, und/oder bis zu 20 Newton aufweisen.

Alternativ hierzu kann die Adsorptionsschicht aber auch aus Aktivkohlefasern, insbesondere in Form eines Aktivkohleflächengebildes, gebildet sein oder Aktivkohlefasern umfassen. Bei dieser Ausführungsform werden insbesondere Aktivkohleflächengebilde mit Flächengewichten von 10 bis 300 g/m², insbesondere 20 bis 200 g/m², vorzugsweise 30 bis 150 g/m², eingesetzt. Erfindungsgemäß geeignete Aktivkohlefaserflächengebilde sind beispielsweise Aktivkohlefasergewebe, -gewirke, -gelege oder -verbundstoffe, insbesondere auf Basis von carbonisierter und aktivierter Cellulose und/oder auf Basis von carbonisiertern und aktiviertem Acrylnitril.

Gleichermaßen ist es möglich, für die Ausbildung der Adsorptionsschicht Aktivkohleteilchen einerseits und Aktivkohlefasern andererseits miteinander zu kombinieren.

Erfindungsgemäß weist die zur Ausbildung der Adsorptionsschicht eingesetzte Aktivkohle (d. h. Aktivkohlepartikel oder Aktivkohlefasern) eine innere Oberfläche (BET) von mindestens 800 m²/g, insbesondere von mindestens 900 m²/g; vorzugsweise von mindestens 1.000 m²/g, bevorzugt im Bereich von 800 bis 2.500 m²/g, auf. Zur Erhöhung der Adsorptionseffizienz bzw. Adsorptionsleistung, insbesondere zum Erhalt einer erhöhten bzw. verbesserten Schutzfunktion auch gegenüber biologischen Schadstoffen, insbesondere biologischen Kampfstoffen, besteht die Möglichkeit, die Adsorptionsschicht, insbesondere die Aktivkohleteilchen und/oder die Aktivkohlefasern, mit mindestens einem Katalysator zu imprägnieren. Erfingdungsgemäß geeignete Katalysatoren sind beispielsweise Enzyme und/oder Metalle, vorzugsweise Metalle, insbesondere aus der Gruppe von Kupfer, Silber, Cadmium, Platin, Palladium, Rhodium, Zink, Quecksilber, Titan, Zirkonium und/oder Aluminium, bevorzugt in Form der entsprechenden Metallionen. Die Menge an Katalysator kann in weiten Bereichen variieren; im allgemeinen beträgt sie 0,05 bis 12 Gew.-%, vorzugsweise 1 bis 10 Gew.-%, besonders bevorzugt 2 bis 8 Gew.-%, bezogen auf das Gewicht der Adsorptionsschicht. Gegebenenfalls durch die Aerosol- und/oder Partikelfilterschicht durchgeschlagene biologische Schadstoffe können auf diese Weise wirksam unschädlich gemacht werden.

Wie zuvor beschrieben, ist die Adsorptionsschicht an der Trägerschicht fixiert bzw. befestigt. Im allgemeinen erfolgt die Befestigung der Adsorptionsschicht an der Trägerschicht mittels eines Klebstoffs, wobei der Klebstoff vorteilhafterweise nur diskontinuierlich bzw. nur punktförmig auf die Trägerschicht aufgetragen ist, um eine gute Gasdurchlässigkeit, insbesondere Luftdurchlässigkeit, der Trägerschicht und auf diese Weise des Adsorptionsfiltermaterials insgesamt beizubehalten. Der Klebstoff sollte dabei in einer Auftragsmenge von 10 bis 80 g/m², insbesondere 20 bis 60 g/m², vorzugsweise 30 bis 50 g/m², aufgetragen sein. Vorteilhafterweise erfolgt der Klebstoffauftrag derart, daß vorteilhafterweise höchstens 50 % der Oberfläche der Trägerschicht, vorzugsweise höchstens 40 % der Oberfläche der Trägerschicht, besonders bevorzugt höchstens 30 % der Oberfläche der Trägerschicht, ganz besonders bevorzugt höchstens 25 % der Oberfläche der Trägerschicht, mit Klebstoff bedeckt ist. Im allgemeinen wird der Klebstoff in Form eines regelmäßigen oder unregelmäßigen Rasters in Form von Klebstoffpunkten auf die Trägerschicht aufgetragen bzw. aufgedruckt, wobei nachfolgend dann die Adsorptionsschicht (z. B. diskrete Aktivkohlepartikel) an den Klebstoffpunkten zum Haften gebracht wird.

Als Trägerschicht eignen sich grundsätzlich textile Flächengebilde, vorzugsweise luftdurchlässige Textilmaterialien. Bevorzugt sind textile Gewebe, Gewirke, Gestricke, Gelege oder Textilverbundstoffe, insbesondere Vliese. Im allgemeinen weist die Trägerschicht ein Flächengewicht von 20 bis 200 g/m², insbesondere 30 bis 150 g/m², bevorzugt 40 bis 120 g/m², auf.

Was die erfindungsgemäß optional vorgesehene Abdeckschicht anbelangt, so ist diese im allgemeinen gleichermaßen als ein textiles Flächengebilde, vorzugsweise ein luftdurchlässiges Textilmaterial, ausgebildet, z. B. als ein Gewebe, Gewirke, Gestricke, Gelege oder Textilverbundstoff, insbesondere ein Vlies. Im allgemeinen weist die Trägerschicht ein Flächengewicht von 50 bis 300 g/m², insbesondere 75 bis 275 g/m², bevorzugt 100 bis 250 g/m², besonders bevorzugt 120 bis 250 g/m², auf.

Zur Verbesserung insbesondere des Aerosolschutzes ist die Abdeckschicht, insbesondere an ihrer Außenseite, oleophobiert und hydrophobiert ausgerüstet, vorzugsweise durch eine entsprechende Imprägnierung. Im Fall des Auftreffens größerer Tropfen von Schad- und Giftstoffen können sich diese infolge der Oleophobierung und Hydrophobierung der Oberfläche der Abdeckschicht auf der Oberfläche des erfindungsgemäßen Adsorptionsfiltermaterials verteilen. Für diesen Zweck geeignete Oleo- bzw. Hydrophobierungsmittel sind dem Fachmann hinlänglich bekannt (z. B. Fluorpolymere, wie Fluorcarbonharze etc.).

Zur Verbesserung insbesondere des Aerosolschutzes und des Schutzes gegenüber biologischen Schadstoffen kann die Abdeckschicht und/oder die Trägerschicht, vorzugsweise die Trägerschicht, mit einer bioziden und/oder biostatischen Ausrüstung bzw. Ausstattung auf Basis einer katalytisch aktiven Komponente versehen sein (vgl. die auf die Anmelderin selbst zurückgehende deutsche Patentanmeldung DE 10 2005 056 537 und deutsche Gebrauchsmusteranmeldung DE 20 2005 018 547, deren gesamter diesbezüglicher Offenbarungsgehalt hiermit durch Bezugnahme eingeschlossen ist); insbesondere bei Ausrüstung bzw. Ausstattung der als Träger für die Adsorptionsschicht dienenden, in Strömungsrichtung der Abdeckschicht und Aerosol-/Partikelfilterschicht nachgeschalteten Trägerschicht mit einer biozid bzw. biostatisch wirksamen katalytisch aktiven Komponente können in wirksamer Weise gegebenenfalls durch die vorteilhafterweise oleophobierte und/oder hydrophobierte Abdeckschicht und die in Strömungsrichtung nachgeschaltete Aerosol- und/oder Partikelfilterschicht durchgeschlagene biologische Schadstoffe unschädlich gemacht werden. Die biozid bzw. biostatisch wirksame katalytisch aktive Komponente kann dabei insbesondere in die vorzugsweise als textiles Flächengebilde ausgebildete Abdeckschicht und/oder Trägerschicht, vorzugsweise nur in die Trägerschicht, eingearbeitet bzw. inkorporiert sein, insbesondere in die das Flächengebilde bildenden Fasern, Fäden, Garne, Filamente oder dergleichen, z. B. durch Einspinnen, Extrudieren, Imprägnierverfahren, chemische oder plasmachemische Behandlungsverfahren oder dergleichen. Als biozid bzw. biostatisch wirksame katalytisch aktive Komponente können insbesondere Metalle oder Metallverbindungen, insbesondere aus der Gruppe von Kupfer, Silber, Cadmium, Platin, Palladium, Rhodium, Zink, Quecksilber, Titan, Zirkonium und/oder Aluminium sowie deren Ionen und/oder Salzen, bevorzugt Kupfer und Silber sowie deren Ionen und/oder Salzen, besonders bevorzugt aus der Gruppe von Ag, Ag₂O, Cu, Cu₂O und CuO sowie deren Mischungen, eingesetzt werden. Die Menge an katalytisch aktiver Komponente, bezogen auf die Gesamtschicht, kann dabei im Bereich von 0,001 bis 20 Gew.-%, insbesondere 0,005 bis 10 Gew.-%, vorzugsweise 0,01 bis 5 Gew.-%, variieren. Erfindungsgemäß geeignete, mit einer biostatisch bzw. biozid wirkenden katalytisch aktiven Komponente beaufschlagte textile Flächengebilde, welche im Rahmen der vorliegenden Erfindung zum Einsatz kommen können, sind kommerziell erhältlich, z. B. von den Firmen Cupron Corporation, New York (USA), Foss Manufacturing Company Inc., Hampton, New Hampshire (USA) oder Noble Fiber Technologies, Clarks Summit, Pennsylvania (USA).

Des weiteren kann die Abdeckschicht mit einem Flammschutz (z. B. mittels Phosphorsäureesterimprägnierung) ausgerüstet sein. Weiterhin kann die Abdeckschicht auch antistatisch ausgerüstet sein. Gemäß einer weiteren Ausführungsform kann die Abdeckschicht auch durch Infrarotreflexionseigenschaften (IR-Reflexionseigenschaften) ausgerüstet sein. Schließlich kann die Abdeckschicht an ihrer den Schadstoffen abgewandten Seite (d. h. im Gebrauchszustand auf der Außenseite) auch mit einer Tarnbedruckung, insbesondere bei der Herstellung von ABC-Schutzanzügen, versehen sein.

Im allgemeinen können die Trägerschicht und/oder die Abdeckschicht ein aus natürlichen und/oder synthetischen Fasern, vorzugsweise aus synthetischen Fasern (Chemiefasern), bestehendes textiles Flächengebilde sein. Für die Ausbildung der Abdeckschicht und/oder Trägerschicht geeignete synthetische Fasern bzw. Chemiefasern sind beispielsweise ausgewählt aus der Gruppe von Polyamiden, Polyestern, Polyolefinen (z. B. Polyethylenen oder Polypropylenen), Polyurethanen, Polyvinyl und/oder Polyacryl.

Neben den vorgenannten Schichten kann das erfindungsgemäße Adsorptionsfiltermaterial auch noch andere Schichten enthalten, insbesondere textile Lagen. Diese können oberhalb, unterhalb oder zwischen den vorgenannten Schichten angeordnet sein.

Wie zuvor beschrieben ist das erfindungsgemäße Adsorptionsfiltermaterial gasdurchlässig, insbesondere luftdurchlässig und/oder wasserdurchlässig und/oder wasserdampfdurchlässig ausgebildet. Hierdurch wird bei der Verarbeitung zu ABC-Schutzanzügen ein hervorragender Tragekomfort erreicht.

Im allgemeinen weist das erfindungsgemäße Adsorptionsfiltermaterial bei einem Strömungswiderstand von 127 Pa eine Gas- bzw. Luftdurchlässigkeit von mindestens 10 l·m⁻²·s⁻¹, insbesondere mindestens 30 l·m⁻²·s⁻¹, vorzugsweise mindestens 50 l·m⁻²·s⁻¹, besonders bevorzugt mindestens 100 l·m⁻²·s⁻¹, ganz besonders bevorzugt mindestens 400 l·m⁻²·s⁻¹, und/oder bis zu 10.000 l·m⁻²·s⁻¹ auf. Da die Gas- bzw. Luftdurchlässigkeit des Adsorptionsfiltermaterials nach der vorliegenden Erfindung zumindest im wesentlichen durch die Aerosol- und/oder Partikelfilterschicht bestimmt bzw. beschränkt, entspricht die Gas- bzw. Luftdurchlässigkeit das erfindungsgemäßen Adsorptionsfiltermaterials insgesamt im wesentlichen der Gas- bzw. Luftdurchlässigkeit der Aerosol- und/oder Partikelfilterschicht.

Im allgemeinen besitzt das erfindungsgemäße Adsorptionsfiltermaterial ein Gesamtflächengewicht von 200 bis 1.000 g/m², insbesondere 225 bis 800 g/m², vorzugsweise 250 bis 600 g/m², besonders bevorzugt 300 bis 500 g/m², insbesondere bei einer Gesamtquerschnittsdicke des erfindungsgemäßen Adsorptionsfiltermaterials von 0,1 bis 10 mm, insbesondere 0,2 bis 5 mm, bevorzugt 0,5 bis 3,0 mm.

Zur Erhöhung des Tragekomforts bei der Verarbeitung des erfindungsgemäßen Adsorptionsfiltermaterials zu ABC-Schutzbekleidung sollte das erfindungsgemäße Adsorptionsfiltermaterial eine Wasserdampfdurchgangsrate von mindestens 5 l/m² pro 24 h, insbesondere mindestens 10 l/m² pro 24 h, vorzugsweise mindestens 15 l/m² pro 24 h, besonders bevorzugt mindestens 20 l/m² pro 24 h, ganz besonders bevorzugt mindestens 25 l/m² pro 24 h, aufweisen. Die Wasserdampfdurchlässigkeit kann nach der sogenannten "Methode des umgekehrten Bechers" bzw. "Inverted Cup Method" nach ASTM E 96 und bei 25 °C gemessen werden. Zu weiteren Einzelheiten zur Messung der Wasserdampfdurchlässigkeit [Water Vapour Transmission Rate, WVTR] wird verwiesen auf McCullough et al. "A Comparison of Standard Methods for Measuring Water Vapour Permeability of Fabrics" in Meas. Sci. Technol.

[Measurements Science and Technology], 14, 1402-1408, August 2003. Auf diese Weise wird ein guter Tragekomfort gewährleistet.

Um eine gute Schutzwirkung gegenüber chemischen Kampfstoffen zu gewährleisten, weist das erfindungsgemäße Adsorptionsfiltermaterial im allgemeinen eine Barriexewirkung gegenüber chemischen Kampfstoffen, insbesondere Bis[2-chlorethyl]sulfid (synonym auch als Senfgas, Lost oder Gelbkreuz bezeichnet), bestimmt nach Methode 2.2 der CRDEC-SP-84010, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, auf.

Weitere Vorteile, Eigenschaften, Aspekte und Merkmale der vorliegenden Erfindung ergeben sich aus der folgenden Beschreibung eines in den Figuren dargestellten Ausführungsbeispiels. Es zeigt:
- Fig.: eine schematische Schnittdarstellung durch den Schichtaufbau eines erfindungsgemäßen Adsorptionsfiltermaterials gemäß einer Ausführungsform der vorliegenden Erfindung, wonach die Adsorptionsschicht aus diskreten Adsorberteilchen, insbesondere Aktivkohlepartikeln, gebildet ist.

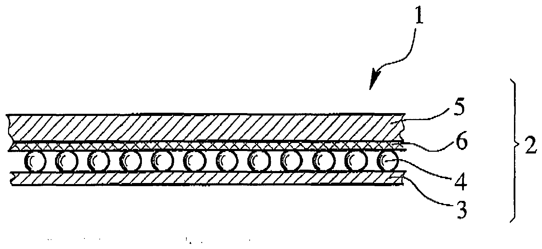

Die einzige Figur zeigt eine schematische Schnittdarstellung durch den Schichtaufbau 2 eines erfindungsgemäßen Adsorptionsfiltermaterials 1 entsprechend einer speziellen Ausgestaltung der vorliegenden Erfindung. Das erfindungsgemäße Adsorptionsfiltermaterial 1 nach der vorliegenden Erfindung, welches sowohl mit einem integrierten Partikel- und Aerosolschutz als auch mit einer Schutzfunktion gegenüber biologischen und/oder chemischen Schadstoffen, insbesondere biologischen und/oder chemischen Kampfstoffen, ausgestattet ist, weist einen mehrschichtigen Aufbau 2 mit einer Trägerschicht 3, einer der Trägerschicht 3 zugeordneten, vorzugsweise an der Trägerschicht 3 fixierten Adsorptionsschicht 4 und eine auf der der Trägerschicht 3 abgewandten Seite der Adsorptionsschicht 4 angeordnete Abdeckschicht 5 auf. Zusätzlich ist das Adsorptionsfiltermaterial 1 mit einer kombinierten Partikel- und Aerosolfilterschicht 6, ausgestattet.

In erfindungsgemäß bevorzugter Ausführungsform ist die Partikel-und Aerosolfilterschicht 6 zwischen der Adsorptionsschicht 4 und der Abdeckschicht 5 angeordnet, d. h. die Partikel- und Aerosolfilterschicht 6 ist auf der der Trägerschicht 3 abgewandten Seite der Adsorptionsschicht 4 angeordnet. Im Gebrauchszustand treten die unschädlich zu machenden Schadstoffe einschließlich Aerosolen und Partikeln nach Durchdringen der äußeren Abdeckschicht 5 also zunächst auf die Partikel- und Aerosolfilterschicht 6, an der die betreffenden Schadstoffpartikel und Aerosole unschädlich gemacht werden, und der gegebenenfalls noch chemische und/oder biologische Schadstoffe enthaltende, von den Partikeln und Aerosolen befreite Schadstoffstrom trifft dann schließlich auf die Adsorptionsschicht 4, wo die verbleibenden Schadstoffe dann durch Adsorptionsprozesse und im Falle der Anwesenheit von Katalysatoren auch zusätzlich durch Zersetzungsprozesse unschädlich gemacht werden.

Für weitere diesbezügliche Einzelheiten zu dem erfindungsgemäßen Adsorptionsfiltermaterial 1 kann auf die vorstehenden Ausführungen verwiesen werden.

Weiterer Gegenstand der vorliegenden Erfindung ist die Verwendung des erfindungsgemäßen Adsorptionsfiltermaterials, wie zuvor beschrieben, zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, sowie von Schutzabdeckungen aller Art, wobei alle vorgenannten Schutzmaterialien vorzugsweise für den ABC-Einsatz bestimmt sind.

Weiterhin ist Gegenstand der vorliegenden Erfindung die Verwendung des erfindungsgemäßen Adsorptionsfiltermaterials, wie zuvor beschrieben, zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich. Außerdem sind Gegenstand der vorliegenden Erfindung die vorgenannten Schutzmaterialien aller Art selbst, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, welche unter Verwendung des erfindungsgemäßen Adsorptionsfiltermaterials hergestellt bzw. das erfindungsgemäße Adsorptionsfiltermaterial aufweisen, wobei alle vorgenannten Schutzmaterialien vorzugsweise für den ABC-Einsatz bestimmt sind.

Schließlich sind weiterer Gegenstand der vorliegenden Erfindung Filter und Filtermaterialien aller Art, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, welche unter Verwendung des erfindungsgemäßen Materials hergestellt sind bzw. das erfindungsgemäße Adsorptionsfiltermaterial aufweisen.

Für weitere Einzelheiten zu den zuvor beschriebenen erfindungsgemäßen Verwendungen und zu den zuvor beschriebenen erfindungsgemäßen Gegenständen kann Bezug genommen werden auf die obigen Ausführungen zu dem erfindungsgemäßen Adsorptionsfiltermaterial, welche in bezug auf die erfindungsgemäßen Verwendungen und die erfindungsgemäßen Gegenstände entsprechend gelten.

### AUSFÜHRUNGSBEISPIEL:

Es werden vier unterschiedliche Adsorptionsfiltermaterialien hergestellt, nämlich drei erfindungsgemäße Adsorptionsfiltermaterialien mit unterschiedlichen Partikel- und Aerosolfilterschichten jeweils in Form eines Vliesstoffes sowie ein Vergleichsadsorptionsfiltermaterial ohne Partikel- und Aerosolfilterschicht.

Zur Herstellung aller Adsorptionsfiltermaterialien wird eine textile Trägerschicht mit einem Flächengewicht von ca, 100 g/m² punktrasterförmig mit ca, 40 g/m² eines Klebstoffs bedruckt, an dem nachfolgend Aktivkohlekügelchen mit mittleren Durchmessern von ca. 0,3 mm in einer Auflagemenge von ca. 180 g/m² zum Haften gebracht werden.

Nach Vernetzen und Aushärten des Klebstoffs wird im Fall des Vergleichsadsorptionsfiltermaterials eine textile Abdeckschicht mit einem Flächengewicht von 150 g/m² auf die Aktivkohleschicht aufkaschiert, wohingegen im Falle der drei erfindungsgemäßen Adsorptionsfiltermaterialien zwischen der Aktivkohleschicht und der Abdeckschicht eine Partikel- und Aerosolfilterschicht in Form eines Vlieses vorgesehen wird, welche bei allen drei erfindungsgemäßen Adsorptionsfiltermaterialien innenseitig auf die äußere Abdeckschicht auflaminiert wird.

Als Partikel- und Aerosolfilterschicht dient bei allein drei erfindungsgemäßen Adsorptionsfiltermaterialien ein aus synthetischen Fasern bestehendes Vlies mit ca. 40 g/m² Flächengewicht und mit einem Porendurchmesser unterhalb von 100 µm bei einer Luftdurchlässigkeit von jeweils ca. 400 l·m⁻²·s⁻¹ bei einem Strömungswiderstand von 127 Pa.

Im Fall des ersten bzw. zweiten bzw. dritten Adsorptionsfiltermaterials (alle erfindungsgemäß) liegt der mittlere Faserdurchmesser bei ca. 10 µm bzw. ca. 2 µm bzw. ca. 0,5 µm und beträgt das Verhältnis der mittleren Porengröße des Vlieses zum mittleren Durchmesser der Textilfasern ca. 8 bzw. ca. 45 bzw. ca. 180.

Bei allen vier Adsorptionsfiltermaterialien wird die jeweilige Barrierewirkung gegenüber Senfgas gemäß Methode 2.2 der CRDEC-SP-84010 im Rahmen des sogenannten konvektiven Strömungstests (*corrvective flow test*) bestimmt. Zu diesem Zweck läßt man bei konstantem Strömungswiderstand mit einer Strömungsgeschwindigkeit von ca. 0,45 cm/s einen Senfgas enthaltenden Luftstrom auf das Adsorptionsfiltermaterial einwirken und bestimmt die flächenbezogene Durchbruchmenge nach 16 Stunden (80 % relative Luftfeuchtigkeit, 32 °C). Bei allen vier Adsorptionsfiltermaterialien liegt die Durchbruchsmenge in bezug auf Senfgas deutlich unterhalb von 4 µg/cm², so daß alle Adsorptionsfiltermaterialien eine gute Schutzwirkung gegenüber chemischen Kampfstoffen zeigen.

Nachfolgend wird an allen vier Adsorptionsfltermaterialien der mittlere Wirkungsgrad Eₘ nach DIN EN 779 (Juli 1993) und der mittlere Abscheidegrad Am nach DIN EN 779 (Juli 1993) bestimmt. Der mittlere Wirkungsgrad Eₘ nach DIN EN 779 liegt beim ersten (erfindungsgemäß) bzw. zweiten (erfindungsgemäß) bzw. dritten (erfindungsgemäß) bzw. vierten (nicht erfindungsgemäß) Adsorptionsfiltermaterial bei ca, 66 % bzw. ca. 86 % bzw. ca. 92 % bzw. ca. 46 %, und der mittlere Abscheidegrad Am nach DIN EN 779 (Juli 1993) liegt beim ersten bzw. zweiten bzw. dritten bzw. vierten Adsorptionsfiltermaterial bei ca. 72 % bzw. ca. 89 % bzw. ca. 97 % bzw. ca. 45 %. Dies zeigt, daß die erfindungsgemäßen Adsorptionsfiltermaterialien einen guten Partikel- und Aerosolschutz aufweisen, der mit steigendem Verhältnis von mittlerer Porengröße des Vlieses zum mittleren Durchmesser der Textilfasern des Vlieses zunimmt, wohingegen das erfindungsgemäße Adsorptionsfiltermaterial zwar einen gewissen Partikel- und Aerosolfilterschutz aufweist, der aber deutlich unterhalb von dem der erfindungsgemäßen Adsorptionsfiltermaterialien liegt.

Weiterhin wird an den vier Adsorptionsfiltermaterialien der integrale Anfangsdurchlaßgrad Dᵢ nach DIN EN 1822 (April 1998; DEHS-Aerosol, MPPS = 0,1 bis 0,3 µm) bestimmt. Der integrale Anfangsdurchlaßgrad Dᵢ liegt bei dem ersten bzw. zweiten bzw. dritten bzw. vierten Adsorptionsfiltermaterial bei ca. 20 % bzw. ca. 15 % bzw. ca. 5 % bzw. ca. 88 %. Während bei dem nichterfindungsgemäßen Adsorptionsfiltermaterial erwartungsgemäß ein unzureichender integraler Anfangsdurchlaßgrad Dᵢ zu beobachten ist, ist dieser bei allen drei erfindungsgemäßen Adsorptionsfiltermaterialien ausreichend, jedoch mit steigendem Verhältnis der mittleren Porengröße des eingesetzten Vliesstoffes zum mittleren Durchmesser der Textilfasern des eingesetzten Vliesstoffes zunehmend verbessert.

Alle drei erfindungsgemäßen Adsorptionsfiltermaterialien weisen zudem gegenüber Partikeln und Aerosolen mit Durchmesser ≥ 1,5 µm eine Abscheiderate oberhalb von 95 % auf, wohingehen diese Abscheiderate bei dem nichterfindungsgemäßen Adsorptionsfiltermaterial unterhalb von 40 % liegt.

## Patentansprüche

1. Luft-, wasser- und wasserdampfdurchlässiges Adsorptionsfiltermaterial (1) mit integriertem Partikel- und Aerosolschutz und mit Schutzfunktion gegenüber biologischen und/oder chemischen Schadstoffen, insbesondere biologischen und/oder chemischen Kampfstoffen, wobei das Adsorptionsfiltermaterial (1) einen mehrschichtigen Aufbau (2) aufweist, wobei der mehrschichtige Aufbau (2) umfaßt:
- eine Trägerschicht (3),
- eine der Trägerschicht (3) zugeordnete, vorzugsweise an der Trägerschicht (3) fixierte Adsorptionsschicht (4) auf Basis von Aktivkohle in Form von Aktivkohleteilchen und/oder Ativkohlefasern mit einer inneren BET-Oberfläche von mindestens 800 m²/g,
- eine auf der der Trägerschicht (3) abgewandten Seite der Adsorptionsschicht (4) angeordnete, oleophobiert und hydrophobiert ausgerüstete Abdeckschicht (5) und
- eine zwischen der Adsorptionsschicht (4) und der Abdeckschicht (5) angeordnete Partikel- und Aerosolfilterschicht (6), wobei die Partikel- und Aerosolfilterschicht (6) ein aus Textilfasern bestehendes textiles Flächengebilde mit durch die Textilfasern begrenzten Poren oder Maschen ist, wobei das Verhältnis der mittleren Porengröße oder Maschenweite zum mittleren Durchmesser der Textilfasern im Bereich von 25 bis 500 liegt;
wobei die Partikel- und Aerosolfilterschicht (6)
- einen mittleren Wirkungsgrad Eₘ nach DIN EN 779 (Juli 1993) von mindestens 70 %,
- einen mittleren Abscheidegrad Am nach DIN EN 779 (Juli 1993) von mindestens 70 % und
- einen integralen Anfangsdurchlaßgrad Dᵢ nach DIN EN 1822 (April 1998; DEHS-Aerosol, MPPS = 0,1 bis 0,3 µm) von höchstens 40 %
aufweist.

2. Adsorptionsfiltermaterial nach Anspruch, **dadurch gekennzeichnet, daß** die Partikel- und Aerosol-filterschicht (6) ein Gewebe, Gewirke, Gestricke, Gelege oder Textilverbundstoff, besonders bevorzugt ein Vlies, ist und/oder daß die Partikel- und Aerosolfilterschicht (6) ein Flächengewicht von 1 bis 100 g/m², insbesondere 5 bis 50 g/m², aufweist und/oder daß die Partikel- und Aerosolfilterschicht (6) ein Flächengewicht von höchstens 100 g/m², insbesondere höchstens 50 g/m², aufweist.

3. Adsorptionsfiltermaterial nach Anspruch 1 oder 2, **dadurch gekennzeichnet, daß** das aus Textilfasern bestechende textile Flächengebilde der Partikel- und Aerosolfilterschicht (6) Textilfasern mit einem mittleren Durchmesser von höchstens 50 µm, insbesondere höchstens 30 µm, vorzugsweise höchstens 20 µm, bevorzugt höchstens 10 µm, besonders bevorzugt höchstens 5 µm, ganz besonders bevorzugt höchstens 2 µm, und/oder mit einem Durchmesser im Bereich von 0,05 bis 50 µm, insbesondere 0,1 bis 50 µm, vorzugsweise 0,2 bis 30 µm, besonders bevorzugt 0,2 bis 20 µm, ganz besonders bevorzugt 0,5 bis 10 µm, aufweiset.

4. Adsorptionsfiltermaterial nach einem oder mehreren der vorangehenden Ansprüche, **dadurch gekennzeichnet, daß** das textile Flächengebilde der Partikel- und Aerosolfilterschicht (6) eine mittlere Porengröße oder mittlere Maschenweite von höchstens 200 µm, insbesondere höchstens 100 µm, vorzugsweise höchstens 75 µm, besonders bevorzugt höchstens 50 µm, ganz besonders bevorzugt höchstens 40 µm, aufweist.

5. Adsorptionsfiltermaterial nach einem oder mehreren der vorangehenden Ansprüche, **dadurch gekennzeichnet, daß** das Verhältnis der mittleren Porengröße oder Maschenweite zum mittleren Durchmesser der Textilfasern im Bereich von 25 bis 350, besonders bevorzugt 25 bis 300, ganz besonders bevorzugt 25 bis 250, liegt.

6. Adsorptionsfiltermaterial nach einem oder mehreren der vorangehenden Ansprüche, **dadurch gekennzeichnet, daß** als Textilfasern der Partikel- und Aerosolfilterschicht (6) natürliche und/oder synthetische Fasern, vorzugsweise synthetische Fasern (Chemiefasern), eingesetzt werden, insbesondere aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyvinylalkohol (PVAL); Polyurethanen; Polyvinylestern; (Meth-)Acrylaten; sowie deren Mischungen.

7. Adsorptionsfiltermaterial nach einem oder mehreren der vorangehenden Ansprüche, **dadurch gekennzeichnet, daß** die Partikel- und Aerosolfilterschicht (6) einen mittleren Wirkungsgrad Eₘ nach DIN EN 779 (Juli 1993) von mindestens 90 %, ganz besonders bevorzugt mindestens 95 %, aufweist und/oder daß die Partikel- und Aerosolfilterschicht (6) einen mittleren Abscheidegrad Aₘ nach DIN EN 779 (Juli 1993) von mindestens 90 %, besonders bevorzugt mindestens 95 %, ganz besonders bevorzugt mindestens 99 %, aufweist und/oder daß die Partikel- und Aerosolfilterschicht (6) einen integralen Anfangsdurchlaßgrad Dᵢ nach DIN EN 1822 (April 1998; DEHS-Aerosol, MPPS = 0,1 bis 0,3 µm) von höchstens 30 %, besonders bevorzugt höchstens 20 %, ganz besonders bevorzugt höchstens 10 %, aufweist.

8. Adsorptionsfiltermaterial nach einem oder mehreren der vorangehenden Ansprüche, **dadurch gekennzeichnet, daß** die Partikel- und Aerosolfilterschicht (6) bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweist und/oder daß die Partikel- und Aerosolfilterschicht (6) bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, von mindestens 95 %, insbesondere mindestens 98 %, bevorzugt mindestens 99 %, aufweist und/oder daß die Partikel- und Aerosolfilterschicht (6) eine Dicke von 0,001 bis 10 mm, insbesondere 0,01 bis 5 mm, vorzugsweise 0,01 bis 1 mm, aufweist.

9. Adsorptionsfiltermaterial nach einem oder mehreren der vorangehenden Ansprüche, **dadurch gekennzeichnet, daß** die Partikel- und Aerosolfilterschicht (6) als ein HEPA-Filter (High Efficiency Penetration oder Particulate Air) oder ULPA-Filter (Ultra Low Penetration oder Particulate Air) ausgebildet ist und/oder daß die Partikel- und Aerosolfilterschicht (6) eine Gasdurchlässigkeit, insbesondere Luftdurchlässigkeit, von mindestens 10 l·m⁻²·s⁻¹, insbesondere mindestens 30 l·m⁻²·s⁻¹, vorzugsweise mindestens 50 l·m⁻²·s⁻¹, besonders bevorzugt minde-stens 100 l·m⁻²·s⁻¹, ganz besonders bevorzugt mindestens 400 l·m⁻²·s⁻¹ oder mehr, bei einem Strömungswiderstand von 127 Pa aufweist.

10. Adsorptionsfiltermaterial nach einem oder mehreren der vorangehenden Ansprüche, **dadurch gekennzeichnet, daß** die Adsorptionsschicht (4) mittels eines Klebstoffs an der Trägerschicht (3) befestigt ist, insbesondere wobei der Klebstoff diskontinuierlich auf die Trägerschicht (3) aufgetragen ist und/oder insbesondere wobei der Klebstoff in einer Auftragsmenge von 10 bis 80 g/m², insbesondere 20 bis 60 g/m², vorzugsweise 30 bis 50 g/m², aufgetragen ist.

11. Adsorptionsfiltermaterial nach einem oder mehreren der vorangehenden Ansprüche, **dadurch gekennzeichnet, daß** die Trägerschicht (3) als ein textiles Flächengebilde, vorzugsweise ein luftdurchlässiges Textilmaterial, bevorzugt ein Gewebe, Gewirke, Gestricke, Gelege oder Textilverbundstoff, insbesondere ein Vlies, ausgebildet ist und/oder daß die Trägerschicht ein Flächengewicht von 20 bis 200 g/m², insbesondere 30 bis 150 g/m², bevorzugt 40 bis 120 g/m², aufweist.

12. Adsorptionsfiltermaterial nach einem oder mehreren der vorangehenden Ansprüche, **dadurch gekennzeichnet, daß** die Abdeckschicht (5) als ein textiles Flächengebilde, vorzugsweise ein luftdurchlässiges Textilmaterial, bevorzugt ein Gewebe, Gewirke, Gestricke, Gelege oder Textilverbundstoff, insbesondere ein Vlies, ausgebildet ist und/oder daß die Trägerschicht ein Flächengewicht von 50 bis 300 g/m², insbesondere 75 bis 275 g/m², bevorzugt 100 bis 250 g/m², besonders bevorzugt 120 bis 250 g/m², aufweist und/oder daß die Abdeckschicht (5) mit einem Flammschutz ausgerüstet ist und/oder daß die Abdeckschicht (5) antistatisch ausgerüstet ist und/oder daß die Abdeckschicht (5) mit Infrarotreflexionseigenschaften ausgerüstet ist.

13. Adsorptionsfiltermaterial nach einem oder mehreren der vorangehenden Ansprüche, **dadurch gekennzeichnet, daß** die Trägerschicht (3) und/oder die Abdeckschicht (5) ein aus natürlichen und/oder synthetischen Fasern, vorzugsweise synthetischen Fasern (Chemiefasern), bestehendes textiles Flächengebilde ist/sind und/oder daß Trägerschicht (3) und/oder die Abdeckschicht (5) ein textiles Flächengebilde mit oder aus natürlichen und/oder synthetischen Fasern, vorzugsweise synthetischen Fasern (Chemiefasern), bevorzugt aus der Gruppe von Polyamiden, Polyestern, Polyolefinen, Polyurethanen, Polyvinyl und/oder Polyacryl, ist/sind und/oder daß die Trägerschicht (3) und/oder die Abdeckschicht (5), vorzugsweise die Trägerschicht (3), mit einer bioziden und/oder biostatischen Ausrüstung auf Basis einer katalytisch aktiven Komponente versehen ist.

14. Adsorptionsfiltermaterial nach einem oder mehreren der vorangehenden Ansprüche, **dadurch gekennzeichnet, daß** das Adsorptionsfiltermaterial (1) ein Gesamtflächengewicht von 200 bis 1.000 g/m², insbesondere 225 bis 800 g/m², vorzugsweise 250 bis 600 g/m², besonders bevorzugt 300 bis 500 g/m², aufweist und/oder daß das Adsorptionsfiltermaterial (1) gasdurchlässig, insbesondere luftdurchlässig, ist, insbesondere wobei die Gas- bzw. Luftdurchlässigkeit des Adsorptionsfiltermaterials (1) mindestens 10 l·m⁻²·s⁻¹ insbesondere mindestens 30 l·m⁻²·s⁻¹, vorzugsweise mindestens 50 l·m⁻²·s⁻¹, besonders bevorzugt mindestens 100 l·m⁻²·s⁻¹, ganz besonders bevorzugt mindestens 400 l·m⁻²·s⁻¹, und/oder bis zu 10.000 l·m⁻²·s⁻¹ bei einem Strömungswiderstand von 127 Pa beträgt, und/oder daß das Adsorptionsfiltermaterial (1) eine Wasserdampfdurchgangsrate von mindestens 5 l/m² pro 24 h, insbesondere mindestens 10 l/m² pro 24 h, vorzugsweise mindestens 15 l/m² pro 24 h, besonders bevorzugt mindestens 20 l/m² pro 24 h, ganz besonders bevorzugt mindestens 25 l/m² pro 24 h, aufweist und/oder daß das Adsorptionsfiltermaterial (1) eine Gesamtquerschnittsdicke von 0,1 bis 10 mm, insbesondere 0,2 bis 5 mm, bevorzugt 0,5 bis 3,0 mm, aufweist.

15. Adsorptionsfiltermaterial nach einem oder mehreren der vorangehenden Ansprüche, **dadurch gekennzeichnet, daß** das Adsorptionsfiltermaterial (1) eine Barrierewirkung gegenüber chemischen Kampfstoffen, insbesondere Bis[2-chlorethyl]-sulfid, bestimmt nach Methode 2.2 der CRDEC-SP-84010, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, aufweist.

16. Verwendung eines Adsorptionsfiltermaterials nach einem der vorangehenden Ansprüche zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz.

17. Verwendung eines Adsorptionsfiltermaterials nach einem der vorangehenden Ansprüche zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

18. Schutzmaterialien aller Art, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzmaterialien für den ABC-Einsatz, hergestellt unter Verwendung eines Adsorptionsfiltermaterials nach einem der vorangehenden Ansprüche und/oder aufweisend ein Adsorptionsfiltermaterial nach einem der vorangehenden Ansprüche.

19. Filter und Filtermaterialien aller Art, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung eines Adsorptionsfiltermaterials nach einem der vorangehenden Ansprüche und/oder aufweisend ein Adsorptionsfiltermaterial nach einem der vorangehenden Ansprüche.

## Claims

1. An air-, water- and water vapour-permeable adsorption filter material (1) with integrated particle and aerosol protection and with a protective function against biological and/or chemical harmful substances, in particular biological and/or chemical warfare agents, wherein the adsorption filter material (1) has a multilayer structure (2), wherein the multilayer structure (2) comprises:
- a carrier layer (3),
- an adsorption layer (4) which is based on activated carbon in the form of activated carbon particles and/or activated carbon fibres with an internal BET surface area of at least 800 m²/g and is associated with the carrier layer (3), preferably fixed to the carrier layer (3),
- a cover layer (5) which has an oleophobic and hydrophobic finish and is arranged on the side of the carrier layer (3) remote from the adsorption layer (4) and
- a particle and aerosol filter layer (6) arranged between the adsorption layer (4) and the cover layer (5), wherein the particle and aerosol filter layer (6) is a textile fabric consisting of textile fibres with pores or meshes bounded by the textile fibres, wherein the ratio of the average pore size or mesh size to the average diameter of the textile fibres in the range from 25 to 500;
wherein the particle and aerosol filter layer (6)
- has an average efficiency Eₘ to DIN EN 779 (July 1993) of at least 70%,
- an average arrestance Aₘ to DIN EN 779 (July 1993) of at least 70% and
- an integral initial permeability Dᵢ to DIN EN 1822 (April 1998; DEHS aerosol, MPPS = 0.1 to 0.3 µm) of at most 40%.

2. An adsorption filter material according to claim 1, **characterised in that** the particle and aerosol filter layer (6) is a woven fabric, a warp- or weft-knitted fabric, a laid fabric or a textile composite, particularly preferably a nonwoven fabric, and/or **in that** the particle and aerosol filter layer (6) has a basis weight of 1 to 100 g/m², in particular 5 to 50 g/m², and/or **in that** the particle and aerosol filter layer (6) has a basis weight of at most 100 g/m², in particular at most 50 g/m².

3. An adsorption filter material according to claim 1 or 2, **characterised in that** the textile fabric consisting of textile fibres of the particle and aerosol filter layer (6) comprises textile fibres with an average diameter of at most 50 µm, in particular at most 30 µm, preferably at most 20 µm, preferably at most 10 µm, particularly preferably at most 5 µm and very particularly preferably at most 2 µm, and/or with a diameter in the range from 0.05 to 50 µm, in particular 0.1 to 50 µm, preferably 0.2 to 30 µm, particularly preferably 0.2 to 20 µm and very particularly preferably 0.5 to 10 µm.

4. An adsorption filter material according to one or more of the preceding claims, **characterised in that** the textile fabric of the particle and aerosol filter layer (6) has an average pore size or average mesh size of at most 200 µm, in particular at most 100 µm, preferably at most 75 µm, particularly preferably at most 50 µm and very particularly preferably at most 40 µm.

5. An adsorption filter material according to one or more of the preceding claims, **characterised in that** the ratio of the average pore size or mesh size to the average diameter of the textile fibres is in the range from 25 to 350, particularly preferably 25 to 300 and very particularly preferably 25 to 250.

6. An adsorption filter material according to one or more of the preceding claims, **characterised in that** the textile fibres used for the particle and aerosol filter layer (6) are natural and/or synthetic fibres, preferably synthetic fibres (man-made fibres), in particular from the group of polyesters (PES); polyolefins, such as polyethylene (PE) and polypropylene (PP), polyvinyl chloride (CLF); polyvinylidene chloride (CLF); acetate (CA); triacetate (CTA); polyacrylic (PAN), polyamide (PA); polyvinyl alcohol (PVAL); polyurethanes; polyvinyl esters; (meth)acrylates; and blends thereof.

7. An adsorption filter material according to one or more of the preceding claims, **characterised in that** the particle and aerosol filter layer (6) has an average efficiency Eₘ to DIN EN 779 (July 1993) of at least 90% and very particularly preferably at least 95%, and/or **in that** the particle and aerosol filter layer (6) has an average arrestance Aₘ to DIN EN 779 (July 1993) of at least 90%, particularly preferably at least 95% and very particularly preferably at least 99%, and/or **in that** the particle and aerosol filter layer (6) has an integral initial permeability Dᵢ to DIN EN 1822 (April 1998; DEHS aerosol, MPPS = 0.1 to 0.3 µm) of at most 30%, particularly preferably at most 20% and very particularly preferably at most 10%.

8. An adsorption filter material according to one or more of the preceding claims, **characterised in that**, at an inflow velocity of 0.1 m/s, the particle and aerosol filter layer (6) has an average arrestance rate to particles and/or aerosols with diameters in the range from 0.1 to 0.3 µm of at least 80%, in particular at least 90% and preferably at least 95%, and/or **in that**, at an inflow velocity of 0.1 m/s, the particle and aerosol filter layer (6) has an average arrestance rate to particles and/or aerosols with diameters of ≥ 2µm, in particular ≥ 1.5 µm, of at least 95%, in particular at least 98% and preferably at least 99%, and/or **in that** the particle and aerosol filter layer (6) has a thickness of 0.001 to 10 mm, in particular 0.01 to 5 mm and preferably 0.01 to 1 mm.

9. An adsorption filter material according to one or more of the preceding claims, **characterised in that** the particle and aerosol filter layer (6) takes the form of a HEPA filter (High Efficiency Particulate Air) or ULPA filter (Ultra Low Penetration Air) and/or in that the particle and aerosol filter layer (6) has a gas permeability, in particular air permeability, of at least 10 l·m⁻²·s⁻¹, in particular at least 30 l·m⁻²·s⁻¹, preferably at least 50 l·m⁻²·s⁻¹, particularly preferably at least 100 l·m⁻²·s⁻¹ and very particularly preferably at least 400 l·m⁻²·s⁻¹ or more, at a flow resistance of 127 Pa.

10. An adsorption filter material according to one or more of the preceding claims, **characterised in that** the adsorption layer (4) is fastened by means of an adhesive to the carrier layer (3), in particular wherein the adhesive is applied discontinuously onto the carrier layer (3) and/or in particular wherein the adhesive is applied at an application rate of 10 to 80 g/m², in particular 20 to 60 g/m² and preferably 30 to 50 g/m².

11. An adsorption filter material according to one or more of the preceding claims, **characterised in that** the carrier layer (3) takes the form of a textile fabric, preferably an air-permeable textile material, preferably a woven fabric, a warp- or weft-knitted fabric, a laid fabric or a textile composite, in particular a nonwoven fabric, and/or **in that** the carrier layer has a basis weight of 20 to 200 g/m², in particular 30 to 150 g/m² and preferably 40 to 120 g/m².

12. An adsorption filter material according to one or more of the preceding claims, **characterised in that** the cover layer (5) takes the form of a textile fabric, preferably an air-permeable textile material, preferably a woven fabric, a warp- or weft-knitted fabric, a laid fabric or a textile composite, in particular a nonwoven fabric, and/or **in that** the cover layer (5) has a basis weight of 50 to 300 g/m², in particular 75 to 275 g/m², preferably 100 to 250 g/m² and particularly preferably 120 to 250 g/m² and/or **in that** the cover layer (5) has a flame retardant finish and/or **in that** the cover layer (5) has an antistatic finish and/or **in that** the cover layer (5) has a finish with infrared reflective properties.

13. An adsorption filter material according to one or more of the preceding claims, **characterised in that** the carrier layer (3) and/or the cover layer (5) is/are a textile fabric consisting of natural and/or synthetic fibres, preferably synthetic fibres (man-made fibres), and/or **in that** the carrier layer (3) and/or the cover layer (5) is/are a textile fabric comprising or composed of natural and/or synthetic fibres, preferably synthetic fibres (man-made fibres), preferably from the group of polyamides, polyesters, polyolefins, polyurethanes, polyvinyl and/or polyacrylic and/or **in that** the carrier layer (3) and/or the cover layer (5), preferably the carrier layer (3), is provided with a biocidal and/or biostatic finish based on a catalytically active component.

14. An adsorption filter material according to one or more of the preceding claims, **characterised in that** the adsorption filter material (1) has an overall basis weight of 200 to 1,000 g/m², in particular 225 to 800 g/m², preferably 250 to 600 g/m² and particularly preferably 300 to 500 g/m², and/or **in that** the adsorption filter material (1) is gas-permeable, in particular air-permeable, in particular wherein the gas- or air-permeability of the adsorption filter material (1) amounts to at least 10 l.m⁻²·s⁻¹, in particular at least 30 l·m⁻²·s⁻¹, preferably at least 50 l·m⁻²·s⁻¹, particularly preferably at least 100 l·m⁻²·s⁻¹, very particularly preferably at least 400 l.m⁻²·s⁻¹, and/or up to 10,000 l·m⁻²·s⁻¹ at a flow resistance of 127 Pa, and/or **in that** the adsorption filter material (1) has a water vapour transmission rate of at least 5 l/m² per 24 h, in particular at least 10 l/m² per 24 h, preferably at least 15 l/m² per 24 h, particularly preferably at least 20 l/m² per 24 h, and very particularly preferably at least 25 l/m² per 24 h and/or **in that** the adsorption filter material (1) has an overall cross-sectional thickness of 0.1 to 10 mm, in particular 0.2 to 5 mm and preferably 0.5 to 3.0 mm.

15. An adsorption filter material according to one or more of the preceding claims, **characterised in that** the adsorption filter material (1) has a barrier action against chemical warfare agents, in particular bis[2-chloroethyl] sulfide, determined according to CRDEC-SP-84010 method 2.2, of at most 4 µg/cm² per 24 h, in particular at most 3.5 µg/cm² per 24 h, preferably at most 3.0 µg/cm² per 24 h, and particularly preferably at most 2.5 µg/cm² per 24 h.

16. Use of an adsorption filter material according to one of the preceding claims for producing protective materials of all kinds, in particular protective clothing, in particular for civilian or military applications, such as protective suits, protective gloves, protective footwear, protective socks, protective headwear and the like, and of protective covers of all kinds, preferably all the above-stated protective materials for ABC use.

17. Use of an adsorption filter material according to one of the preceding claims for the production of filters and filter materials of all kinds, in particular for the removal of harmful, odorous and toxic agents of all kinds, in particular from air or gas streams, such as ABC protective mask filters, odour filters, panel filters, air filters, in particular filters for purifying room air, adsorptive carrier structures and filters for medical applications.

18. Protective materials of all kinds, in particular for civilian or military applications, in particular protective clothing, such as protective suits, protective gloves, protective footwear, protective socks, protective headwear and the like, and of protective covers of all kinds, preferably all the above-stated protective materials for ABC use manufactured using an adsorption filter material according to one of the preceding claims and/or comprising an adsorption filter material according to one of the preceding claims.

19. Filters and filter materials of all kinds, in particular for the removal of harmful, odorous and toxic agents of all kinds, in particular from air or gas streams, such as ABC protective mask filters, odour filters, panel filters, air filters, in particular filters for purifying room air, adsorptive carrier structures and filters for medical applications manufactured using an adsorption filter material according to one of the preceding claims and/or comprising an adsorption filter material according to one of the preceding claims.

## Revendications

1. Matériau de filtration par adsorption (1) perméable à l'air, à l'eau et à la vapeur d'eau à protection intégrée contre les particules et les aérosols et à fonction de protection contre les contaminants biologiques et/ou chimiques, en particulier les armes biologiques et/ou chimiques, ledit matériau de filtration par adsorption (1) présentant une conception multi-couches (2), ladite conception multi-couches (2) comprenant:
- une couche support (3),
- une couche d'adsorption (4) associée à la couche support (3), de préférence fixée à la couche support (3), à base de charbon actif sous forme de particules de charbon actif et/ou de fibres de charbon actif présentant une surface spécifique BET d'au moins 800 m²/g,
- une couche de revêtement (5), disposée sur la face de la couche d'adsorption (4) à l'opposé de la couche support (3), traitée de sorte à être oléophobe et hydrophobe et
- une couche de filtration des particules et des aérosols (6) disposée entre la couche d'adsorption (4) et la couche de revêtement (5), ladite couche de filtration des particules et des aérosols (6) étant une matière textile constituée de fibres textiles, lesdites fibres textiles délimitant des pores ou des mailles, le rapport entre la taille moyenne des pores ou l'ouverture moyenne des mailles et le diamètre moyen des fibres textiles étant situé dans la plage allant de 25 à 500 ;
ladite couche de filtration des particules et des aérosols (6)
- présentant un degré d'efficacité moyen Eₘ selon DIN EN 779 (Juillet 1993) d'au moins 70 %,
- un degré de séparation moyen Aₘ selon DIN EN 779 (Juillet 1993) d'au moins 70 % et
- un degré de perméabilité initial intégral Dᵢ selon DIN EN 1822 (Avril 1998 ; aérosol DEHS, MPPS = de 0,1 à 0,3 µm) d'au plus 40 %.

2. Matériau de filtration par adsorption selon la revendication 1, **caractérisé en ce que** la couche de filtration des particules et des aérosols (6) est un tissu, un tricot, un textile à mailles, un treillis ou un textile non tissé, en particulier de préférence un non tissé, et/ou la couche de filtration des particules et des aérosols (6) présente un poids surfacique de 1 à 100 g/m², en particulier de 5 à 50 g/m², et/ou la couche de filtration des particules et des aérosols (6) présente un poids surfacique d'au plus 100 g/m², en particulier d'au plus 50 g/m².

3. Matériau de filtration par adsorption selon la revendication 1 ou 2, **caractérisé en ce que** la couche de filtration des particules et des aérosols (6) comprend une matière textile constituée de fibres textiles présentant un diamètre moyen d'au plus 50 µm, en particulier d'au plus 30 µm, de préférence d'au plus 20 µm, de manière davantage préférée d'au plus 10 µm, de manière particulièrement préférée d'au plus 5 µm, de manière préférée entre toutes d'au plus 2 µm, et/ou un diamètre situé dans la plage allant de 0,05 à 50 µm, en particulier de 0,1 à 50 µm, de préférence de 0,2 à 30 µm, de manière particulièrement préférée de 0,2 à 20 µm, de manière préférée entre toutes de 0,5 à 10 µm.

4. Matériau de filtration par adsorption selon une ou plusieurs des revendications précédentes, **caractérisé en ce que** la matière textile constituant la couche de filtration des particules et des aérosols (6) présente une taille moyenne des pores ou une ouverture moyenne des mailles d'au plus 200 µm, en particulier d'au plus 100 µm, de préférence d'au plus 75 µm, de manière particulièrement préférée d'au plus 50 µm, de manière préférée entre toutes d'au plus 40 µm.

5. Matériau de filtration par adsorption selon une ou plusieurs des revendications précédentes, **caractérisé en ce que** le rapport entre la taille moyenne des pores ou l'ouverture moyenne des mailles et le diamètre moyen des fibres textiles est situé dans la plage allant de 25 à 350, de manière particulièrement préférée de 25 à 300, de manière préférée entre toutes de 25 à 250.

6. Matériau de filtration par adsorption selon une ou plusieurs des revendications précédentes, **caractérisé en ce que** les fibres textiles de la couche de filtration des particules et des aérosols (6) sont des fibres naturelles et/ou synthétiques, de préférence des fibres synthétiques (fibres chimiques), en particulier du groupe des polyesters (PES) ; des polyoléfines, telles que le polyéthylène (PE) et le polypropylène (PP), le polychlorure de vinyle (CLF) ; le polychlorure de vinylidène (CLF) ; l'acétate de cellulose (CA) ; le triacétate de cellulose (CTA) ; le polyacrylonitrile (PAN), un polyamide (PA) ; l'alcool polyvinylique (PVAL) ; le polyuréthane ; l'ester polyvinylique ; un (méth)acrylate ; ainsi que des mélanges de ceux-ci.

7. Matériau de filtration par adsorption selon une ou plusieurs des revendications précédentes, **caractérisé en ce que** la couche de filtration des particules et des aérosols (6) présente un degré d'efficacité moyen Eₘ selon DIN EN 779 (Juillet 1993) d'au moins 90 %, de manière préférée entre toutes d'au moins 95 %, et/ou la couche de filtration des particules et des aérosols (6) présente un degré de séparation moyen Aₘ selon DIN EN 779 (Juillet 1993) d'au moins 90 %, de manière particulièrement préférée d'au moins 95 %, de manière préférée entre toutes d'au moins 99 %, et/ou la couche de filtration des particules et des aérosols (6) présente un degré de perméabilité initial intégral Dᵢ selon DIN EN 1822 (Avril 1998 ; aérosol DEHS, MPPS = de 0,1 à 0,3 µm) d'au plus 30 %, de manière particulièrement préférée d'au plus 20 %, de manière préférée entre toutes d'au plus 10 %.

8. Matériau de filtration par adsorption selon une ou plusieurs des revendications précédentes, **caractérisé en ce que** la couche de filtration des particules et des aérosols (6) présente, à une vitesse d'incidence de l'écoulement de 0,1 m/s, pour des particules et/ou des aérosols de diamètre situé dans la plage allant de 0,1 à 0,3 µm, un taux de séparation moyen d'au moins 80 %, en particulier d'au moins 90 %, de préférence d'au moins 95 %, et/ou la couche de filtration des particules et des aérosols (6) présente, à une vitesse d'incidence de l'écoulement de 0,1 m/s, pour des particules et/ou des aérosols de diamètre ≥ 2 µm, en particulier ≥ 1,5 µm, un taux de séparation moyen d'au moins 95 %, en particulier d'au moins 98 %, de préférence d'au moins 99 %, et/ou la couche de filtration des particules et des aérosols (6) présente une épaisseur de 0,001 à 10 mm, en particulier de 0,01 à 5 mm, de préférence de 0,01 à 1 mm.

9. Matériau de filtration par adsorption selon une ou plusieurs des revendications précédentes, **caractérisé en ce que** la couche de filtration des particules et des aérosols (6) est formée d'un filtre HEPA (High Efficiency Pénétration ou Particulate Air) ou d'un filtre ULPA (Ultra Low Pénétration ou Particulate Air) et/ou la couche de filtration des particules et des aérosols (6) présente une perméabilité aux gaz, en particulier une perméabilité à l'air, d'au moins 10 l.m⁻²·s⁻¹, en particulier d'au moins 30 l·m⁻².s⁻¹, de préférence d'au moins 50 l·m⁻²·s⁻¹, de manière particulièrement préférée d'au moins 100 l·m⁻²·s⁻¹, de manière préférée entre toutes d'au moins 400 l·m⁻²·s⁻¹ ou plus, pour une résistance à l'écoulement de 127 Pa.

10. Matériau de filtration par adsorption selon une ou plusieurs des revendications précédentes, **caractérisé en ce que** la couche d'adsorption (4) est fixée à la couche support (3) au moyen d'une colle, la colle étant en particulier appliquée discontinûment sur la couche support (3) et/ou la colle étant en particulier appliquée de sorte que la quantité appliquée soit de 10 à 80 g/m², en particulier de 20 à 60 g/m², de préférence de 30 à 50 g/m².

11. Matériau de filtration par adsorption selon une ou plusieurs des revendications précédentes, **caractérisé en ce que** la matière textile constituant la couche support (3) est de préférence un matériau textile perméable à l'air, de manière davantage préférée un tissu, un tricot, un textile à mailles, un treillis ou un textile non tissé, en particulier un non tissé et/ou la couche support présente un poids surfacique de 20 à 200 g/m², en particulier de 30 à 150 g/m², de préférence de 40 à 120 g/m².

12. Matériau de filtration par adsorption selon une ou plusieurs des revendications précédentes, **caractérisé en ce que** la matière textile constituant la couche de revêtement (5) est de préférence un matériau textile perméable à l'air, de manière davantage préférée un tissu, un tricot, un textile à mailles, un treillis ou un textile non tissé, en particulier un non tissé et/ou la couche de revêtement (5) présente un poids surfacique de 50 à 300 g/m², en particulier de 75 à 275 g/m², de préférence de 100 à 250 g/m², de manière particulièrement préférée de 120 à 250 g/m², et/ou la couche de revêtement (5) présente des propriétés ignifuges et/ou la couche de revêtement (5) présente des propriétés anti-statiques et/ou la couche de revêtement (5) présente des propriétés de réflexion dans l'infrarouge.

13. Matériau de filtration par adsorption selon une ou plusieurs des revendications précédentes, **caractérisé en ce que** la couche support (3) et/ou la couche de revêtement (5) est/sont une matière textile constituée de fibres naturelles et/ou synthétiques, de préférence de fibres synthétiques (fibres chimiques), et/ou la couche support (3) et/ou la couche de revêtement (5) est/sont une matière textile comprenant ou constituée de fibres naturelles et/ou synthétiques, de préférence de fibres synthétiques (fibres chimiques), de manière davantage préférée du groupe des polyamides, des polyesters, des polyoléfines, des polyuréthanes, des composés polyvinyliques et/ou polyacryliques, et/ou la couche support (3) et/ou la couche de revêtement (5), de préférence la couche support (3), est revêtue d'une substance biocide et/ou biostatique à base d'un constituant actif catalytique.

14. Matériau de filtration par adsorption selon une ou plusieurs des revendications précédentes, **caractérisé en ce que** le matériau de filtration par adsorption (1) présente un poids surfacique total de 200 à 1 000 g/m², en particulier de 225 à 800 g/m², de préférence de 250 à 600 g/m², de manière particulièrement préférée de 300 à 500 g/m², et/ou le matériau de filtration par adsorption (1) est perméable aux gaz, en particulier perméable à l'air, ladite perméabilité aux gaz, respectivement à l'air, du matériau de filtration par adsorption (1) étant d'au moins 10 l.m⁻²·s⁻¹, en particulier d'au moins 30 l.m⁻²·s⁻¹, de préférence d'au moins 50 l.m⁻²·s⁻¹, de manière particulièrement préférée d'au moins 100 l·m⁻²·s⁻¹, de manière préférée entre toutes d'au moins 400 l·m⁻²·s⁻¹, et/ou jusqu'à 10000 l·m⁻²·s⁻¹ pour une résistance à l'écoulement de 127 Pa, et/ou le matériau de filtration par adsorption (1) présente un taux de perméabilité à la vapeur d'eau d'au moins 5 L/m² par 24 h, en particulier d'au moins 10 L/m² par 24 h, de préférence d'au moins 15 L/m² par 24 h, de manière particulièrement préférée d'au moins 20 L/m² par 24 h, de manière préférée entre toutes d'au moins 25 L/m² par 24 h, et/ou le matériau de filtration par adsorption (1) présente une épaisseur de section transversale totale de 0,1 à 10 mm, en particulier de 0,2 à 5 mm, de manière davantage préférée de 0,5 à 3,0 mm.

15. Matériau de filtration par adsorption selon une ou plusieurs des revendications précédentes, **caractérisé en ce que** le matériau de filtration par adsorption (1) présente un effet barrière contre les armes chimiques, en particulier contre le sulfure de bis[2-chloroéthyle], déterminé selon la Méthode 2.2 du CRDEC-SP-84010, d'au plus 4 µg/cm² par 24 h, en particulier d'au plus 3,5 µg/cm² par 24 h, de préférence d'au plus 3,0 µg/cm² par 24 h, de manière particulièrement préférée d'au plus 2,5 µg/cm² par 24 h.

16. Utilisation d'un matériau de filtration par adsorption selon l'une quelconque des revendications précédentes pour la fabrication de matériaux de protection de toutes sortes, en particulier de vêtements de protection, en particulier pour le domaine civil ou militaire, comme des équipements de protection, des gants de protection, des chaussures de protection, des chaussettes de protection, des vêtements de protection de la tête et analogues, et de couvertures de protection de toutes sortes, de préférence l'ensemble des matériaux de protection précités pour une utilisation ABC.

17. Utilisation d'un matériau de filtration par adsorption selon l'une quelconque des revendications précédentes pour la fabrication de filtres et de matériaux de filtration de toutes sortes, en particulier pour l'élimination de substances nocives, malodorantes et toxiques de toutes sortes, en particulier de flux d'air et/ou de flux gazeux, comme des filtres pour masques de protection ABC, des filtres anti-odeur, des filtres de surface, des filtres à air, en particulier des filtres pour la purification de l'air ambiant, des structures de support et des filtres adsorbants pour le domaine médical.

18. Matériaux de protection de toutes sortes, en particulier pour le domaine civil ou militaire, en particulier des vêtements de protection, comme des équipements de protection, des gants de protection, des chaussures de protection, des chaussettes de protection, des vêtements de protection de la tête et analogues, comme des couvertures de protection, de préférence l'ensemble des matériaux de protection précités pour une utilisation ABC, fabriqués en utilisant un matériau de filtration par adsorption selon l'une quelconque des revendications précédentes et/ou comprenant un matériau de filtration par adsorption selon l'une quelconque des revendications précédentes.

19. Filtre et matériaux de filtration de toutes sortes, en particulier pour l'élimination de substances nocives, malodorantes et toxiques de toutes sortes, en particulier de flux d'air et/ou gazeux, comme des filtres pour masques de protection ABC, des filtres anti-odeur, des filtres de surface, des filtres à air, en particulier des filtres pour la purification de l'air ambiant, des structures de support et des filtres adsorbants pour le domaine médical, fabriqués en utilisant un matériau de filtration par adsorption selon l'une quelconque des revendications précédentes et/ou comprenant un matériau de filtration par adsorption selon l'une quelconque des revendications précédentes.
